Europäisches Patentamt

(19) European Patent Office

Office européen des brevets

(11) Numéro de publication: **0 201 384**
A2

(12) # DEMANDE DE BREVET EUROPEEN

(21) Numéro de dépôt: **86400776.0**

(51) Int. Cl.⁴: **B 60 R 13/06**

(22) Date de dépôt: **11.04.86**

---

(30) Priorité: **07.05.85 FR 8506910**

(43) Date de publication de la demande: **12.11.86**
**Bulletin 86/46**

(84) Etats contractants désignés: **AT DE FR GB IT SE**

(71) Demandeur: **RENAULT VEHICULES INDUSTRIELS Société Anonyme dite:, 129 rue Servient "La Part Dieu", F-69003 Lyon (FR)**

(72) Inventeur: **Gasca, Michel, Chemin des Bruyères, F-69240 Sainte Consorce (FR)**
Inventeur: **Blanchard, André, Rue du Château d'Eau, F-69360 Communay (FR)**
Inventeur: **Griffet, Alain, Chemin de Lavignon, F-38540 Heyrieux (FR)**

(74) Mandataire: **Ernst-Schonberg, Michel, REGIE NATIONALE DES USINES RENAULT (S. 0804), F-92109 Boulogne Billancourt Cedex (FR)**

---

(54) **Profil de protection de jonction collée de vitre sur une paroi de véhicule.**

㊼ Profil de protection (14 ou 15) d'une jonction collée de vitre (12 ou 13) sur une paroi (11) de véhicule, caractérisé par le fait qu'il prossède un moyen d'accrochage (34) sur ladite paroi (11) et une bande élastique (30, 30') d'appui sur la vitre (12 ou 13) et que ladite bande porte une nervure (31) de positionnement sensiblement perpendiculaire qui s'étend le long du bord de la vitre (12 ou 13).

EP 0 201 384 A2

0640077 6.0

0201384

# PROFIL DE PROTECTION DE JONCTION COLLEE DE VITRE SUR UNE PAROI DE VEHICULE.

L'invention concerne un profil de protection de jonction collée de vitre sur une paroi de véhicule et concerne plus particulièrement un profil de protection amovible d'un bord de vitre collée sur une paroi de carrosserie de véhicule et notamment de véhicules de transport en commun.

On connaît des profils de protection constitués par des lames métalliques ou plastiques collées sur le bord des vitres dans le but d'améliorer l'aspect de finition de montage de la vitre et pour améliorer l'écoulement de l'air le long de celle-ci au cours de l'avancement du véhicule.

Le montage de tels profils est coûteux en raison du prix de l'adhésif et du temps de sa mise en place. Les risques de décolement du profil par suite du vieillissement de l'adhésif et les difficultés de remplacement des vitres par suite de la destruction préalable rendue nécessaire de la liaison collée, ont imposé la recherche de profils de protection aisément amovibles.

L'invention a donc pour objet un profil de protection présentant une sécurité de mise en place et de retrait facilitant le remplacement de la vitre amélioré par l'emploi d'un mastic de collage.

Cet objet est atteint par l'emploi d'un profil amovible caractérisé par le fait que le profil possède un moyen d'accrochage sur la paroi du véhicule et une bande élastique d'appui sur la vitre et que ladite bande porte une nervure de positionnement sensiblement perpendiculaire qui s'étend le long du bord de la vitre.

49398 1 1676

Le profil ainsi réalisé recouvre par sa bande élastique le bord de la vitre en appui sur le mastic de collage si bien que celui-ci est efficacement protégé contre les risques de vieillissement sous l'action du rayonnement solaire.

A titre d'exemple le profil de protection pourra être réalisé par extrusion d'une matière élastomère thermoplastique oléfinique ou d'une matière plastique stabilisée de la famille des polystyrènes constitués par un alléage ou par un copolymère d'ABS avec un quatrième monomère.

D'autres avantages ainsi que des formes de réalisation du profil de protection apparaîtront à la lecture de la description en référence au dessin dans lequel :

- la figure 1 est une vue en perspective d'une carrosserie de véhicule de transport en commun montrant son vitrage latéral ;

- les figures 2-3-4 sont des sections transversales selon les lignes 2-2, 3-3 et 4-4 de la figure 1.

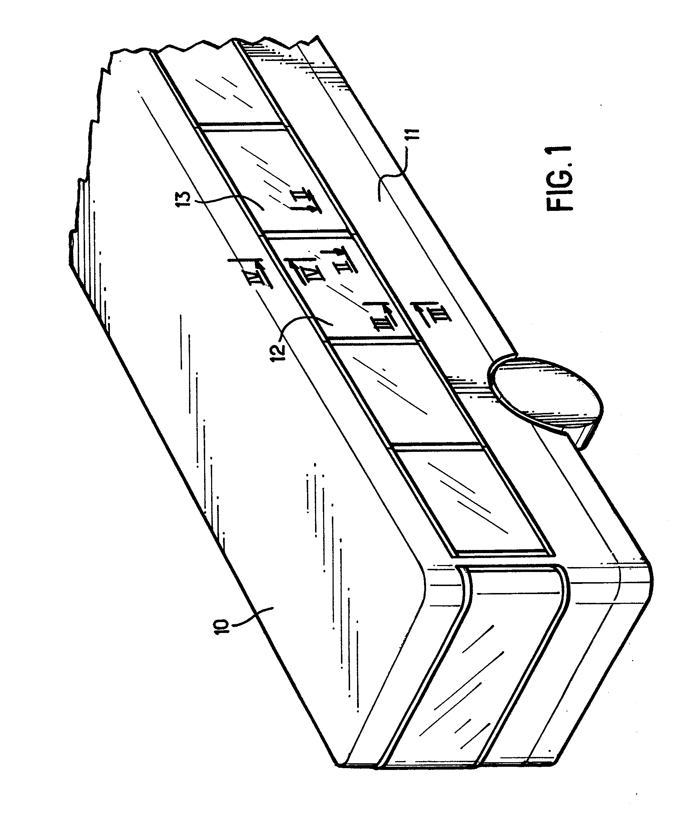

Selon la figure 1, la carrosserie 10 montre sa paroi latérale 11 formée soit par un panneau extérieur soit par son vitrage constitué par un certain nombre d'éléments dont les références 12, 13 désignent deux vitres latérales adjacentes équipées d'éléments 14, 15 du profil de protection.

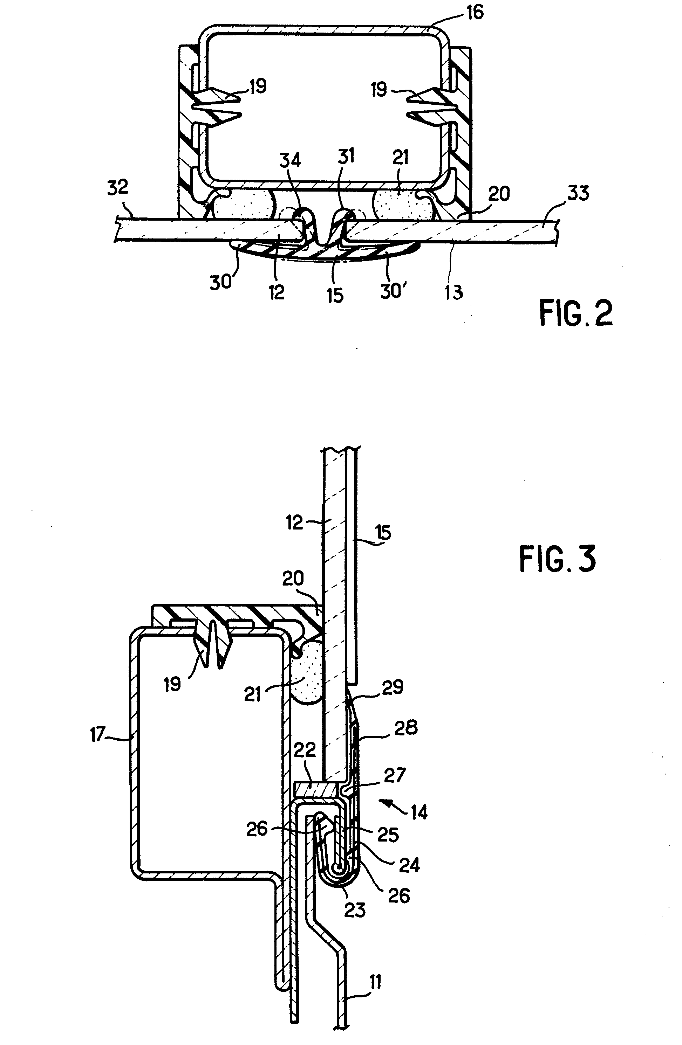

La paroi latérale 11 et l'ensemble des vitres 12, 13 recouvrent une ossature porteuse constituée par des corps creux tels que 16, 17, 18 visibles aux figures 2, 3, 4. Les différents corps creux possèdent des perçages de retenue de doigts élastiques 19 portés par des butées plastiques 20 pouvant être situées aux extrémités des corps creux 16, 17, 18 limitant l'ouverture de chacune des vitres telles que 12, 13.

Le long de ces mêmes corps creux et en suivant l'emplacement de la vitre est posé un mastic de collage 21 à l'aide d'un appareil d'extrusion d'un cordon de mastic ou par une bande collante constitutive du support du cordon de mastic. Le corps creux 17 porte au niveau des butées plastiques 20 deux cales 22 de butée et de positionnement vertical de la vitre 12.

Cette mesure constructive permet la pose de la vitre 12 sur les cales 22 préalablement à l'exercice de la pression transversale sur ladite vitre au cours de laquelle celle-ci vient en appui sur les butées plastiques 20 et adhère au mastic de collage.

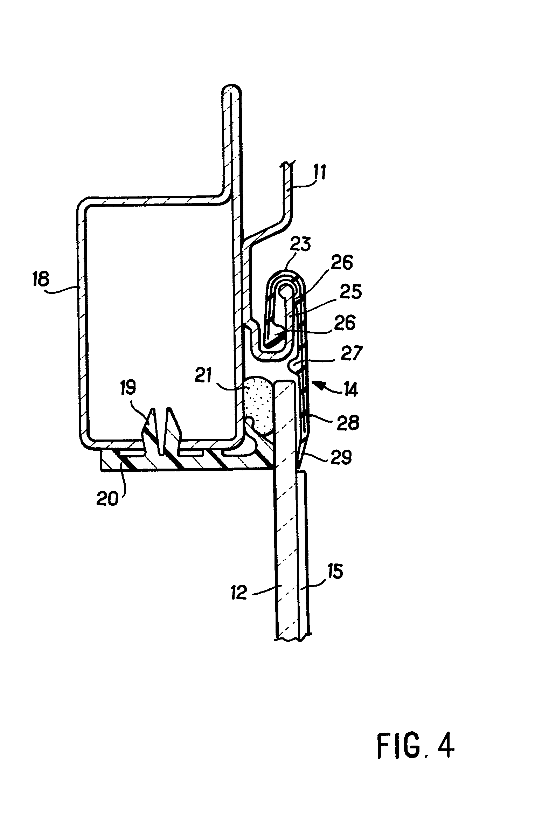

Les profils de protection 14 inférieur et supérieur sont montrés sur les figures 3 et 4. Chaque profil possède un côté recourbé 23 portant une armature interne 24 dans le but de réaliser l'accrochage par pincement du profil 14 sur un bord de tôle 25 associé à l'élément 17 ou 18 de l'ossature. L'action de pincement et d'accrochage précitée est améliorée par la présence d'appuis additionnels 26 faisant partie de la boucle constitutive du côté 23 du profil 14. Ce dernier comporte par ailleurs une nervure 27 de positionnement adjacente aux cales 22.

Le côté latéral du profil 14 se prolonge vers le haut (figure 3) ou vers le bas (figure 4) par une bande élastique 28 qui se termine par une lèvre 29 souple et mince dans le but de favoriser une bonne tangence avec la vitre .

Le profil de protection 15 montré à la figure 2 est constitué par un ensemble de deux bandes élastiques 30, 30' respectivement en appui sur les vitres 12, 13 dont la face interne présente à l'état de repos une concavité suffisante pour obtenir une flexion simultanée desdites bandes. La face interne des bandes 30, 30' est séparée par une nervure longitudinale 31 de positionnement qui s'étend le long des bords opposés des vitres 12 et 13. La nervure 31 est divisée longitudinalement et porte des terminaisons d'accrochage 34 sur les bords opposés des vitres 12 et 13 et prennent appui par suite de la flexion du profil 15 sur les faces collées 32, 33 de ces vitres.

## REVENDICATIONS

1. Profil de protection (14 ou 15) d'une jonction collée de vitre (12 ou 13) sur une paroi (11) de véhicule, caractérisé par le fait qu'il possède un moyen d'accrochage (23, 34) sur ladite paroi (11) et une bande élastique (28, 30, 30') d'appui sur la vitre (12 ou 13) et que ladite bande porte une nervure (27, 31) de positionnement sensiblement perpendiculaire qui s'étend le long du bord de la vitre (12 ou 13).

2. Profil de protection selon la revendication 1, caractérisé par le fait que la nervure de positionnement (31) est divisée longitudinalement et porte des terminaisons (32) d'accrochage sur le bord de la vitre (12, 13) qui prennent appui sur la face (32, 33) collée à celle-ci.

3. Profil de protection selon la revendication 1, caractérisé par le fait que le moyen d'accrochage est constitué par un côté (23) recourbé du profil portant une armature interne (24) élastique et des appui (26) sur les faces opposées d'unbord (25) de tôle associé à élément d'ossature (17, 18) solidaire de la carrosserie du véhicule.

4. Profil de protection selon les revendications 1 et 3, caractérisé par le fait que la nervure de positionnement (27) est adjacente à une cale (22) de butée et de positionnement vertical de la vitre (12) et que cette dernière est en appui transversal sur un organe de butée (20) porté par l'élément d'ossature (17) et sur un mastic de collage (21).

FIG. 1

FIG.2

FIG.3

FIG. 4